# FASCICULE DE BREVET EUROPEEN

(11) **EP 3 451 179 B1**
(45) Date de publication et mention de la délivrance du brevet: **26.07.2023**
(21) Numéro de dépôt: 18191029.0
(22) Date de dépôt: 27.08.2018
(51) Int. Cl.: G06F 13/28

(54) **CONTRÔLEUR D'ACCÈS DIRECT EN MÉMOIRE, DISPOSITIF ET PROCÉDÉ DE RÉCEPTION, STOCKAGE ET TRAITEMENT DE DONNÉES CORRESPONDANTS**
STEUEREINRICHTUNG FÜR DIREKTEN SPEICHERZUGANG, ENTSPRECHENDE VORRICHTUNG UND ENTSPRECHENDES VERFAHREN ZUM EMPFANGEN, SPEICHERN UND VERARBEITEN VON DATEN
DIRECT MEMORY ACCESS CONTROLLER, CORRESPONDING DEVICE AND METHOD FOR RECEIVING, STORING AND PROCESSING DATA

(30) Priorité: 30.08.2017 FR 1757998
(43) Date de publication de la demande: 06.03.2019
(73) Titulaire: Commissariat à l'énergie atomique et aux énergies alternatives, 75015 Paris (FR)
(72) Inventeur: DURAND, Yves, 38330 Saint-Ismier (FR); BERNARD, Christian, 38960 Saint Etienne de Crossey (FR)
(74) Mandataire: Bonnet, Michel

(56) Documents cités:
- EP-A1- 1 619 590
- WO-A1-98/12630
- US-A1- 2010 169 673

## Description

La présente invention concerne un contrôleur d'accès direct en mémoire destiné à être introduit dans un noeud de calcul d'un système sur puce. Elle concerne également un dispositif de traitement de données à réseau sur puce dont les noeuds de calcul comportent chacun un tel contrôleur d'accès direct en mémoire. Elle concerne également un procédé de réception et de stockage de données pouvant être mis en oeuvre grâce à ce contrôleur d'accès direct en mémoire.

Un tel contrôleur, qualifié de contrôleur DMA (de l'Anglais « Direct Memory Access »), est généralement utilisé dans un dispositif de traitement de données à traitements distribués nécessitant de nombreux transferts de données entre différents noeuds de calcul. Il permet de transférer des données à traiter ou traitées par un processeur ou accélérateur d'un noeud de calcul, en provenance de ou allant vers un périphérique tel qu'un autre noeud de calcul, un port de communication, un disque dur ou une mémoire quelconque. Il réalise le transfert entre ce périphérique et une mémoire locale disposée au plus près du processeur ou accélérateur dans le noeud de calcul auquel il appartient, sans intervention de ce processeur ou accélérateur si ce n'est pour initier et conclure le transfert. Ainsi, dans une architecture distribuée où les échanges de données sont nombreux, par exemple dans le domaine applicatif de l'Internet des objets loT (de l'anglais « Internet of Things »), les processeurs et accélérateurs dédiés aux traitements de données sont déchargés des transferts.

Un contrôleur DMA est par exemple très utile dans un système où des accès répétés à des périphériques rapides pourraient sinon presque bloquer ou au moins ralentir le traitement effectué par le processeur ou accélérateur auprès duquel il se trouve. Sa présence optimise le temps de traitement des applications logicielles exécutées par le processeur ou accélérateur en laissant le contrôleur DMA gérer les transferts de données depuis ou vers la mémoire locale. Il est généralement employé en émission de données, pour un transfert à distance depuis la mémoire locale, mais peut également être employé en réception de données, pour une réception de données et un transfert vers la mémoire locale.

L'invention s'applique plus particulièrement à un contrôleur d'accès direct en mémoire destiné à être introduit dans un noeud de calcul d'un système sur puce, employé au moins en réception de données, comportant ainsi :
- une mémoire tampon d'entrée pour la réception de paquets de données à traiter provenant d'une interface d'entrées/sorties du noeud de calcul,
- un module de gestion d'écriture des données à traiter extraites de chaque paquet dans un espace d'adressage local du noeud de calcul, cet espace d'adressage local étant partagé par au moins un processeur de traitement desdites données autre que le contrôleur d'accès direct en mémoire,

- une unité arithmétique et logique d'exécution de microprogrammes, et
- un registre de stockage d'au moins un microprogramme.

Un tel contrôleur DMA est par exemple décrit dans l'article de Martin et al, intitulé « A microprogrammable memory controller for high-performance dataflow applications », publié à l'occasion de la conférence ESSCIRC 2009 qui s'est tenue à Athènes (GR) du 14 au 18 septembre 2009. Ce contrôleur DMA est principalement employé en émission de données, de sorte qu'il comporte en outre une mémoire tampon de sortie pour l'émission de paquets de données traitées vers l'interface d'entrées/sorties du noeud de calcul et un module de gestion de lecture dans l'espace d'adressage local. Son unité arithmétique et logique d'exécution de microprogrammes est commandée par le module de gestion de lecture et est appliquée, en émission de données, à la lecture de ces données dans l'espace d'adressage local. Elle permet en outre la gestion de déplacements complexes programmés d'un pointeur de travail, en lecture ou en écriture, dans une mémoire tampon supplémentaire interne au contrôleur DMA, pour réordonner si besoin les données provenant de l'espace d'adressage local avant leur émission vers l'extérieur du noeud de calcul de manière à respecter une séquence prédéfinie. Il est alors possible d'organiser les données à l'émission en fonction des traitements ultérieurs qu'elles doivent subir. Mais certains traitements ne permettent pas d'anticiper une réorganisation des données à la source, de sorte que cela doit se faire à la réception. Ainsi, lorsque le cas se présente, les données reçues par un noeud de calcul doivent généralement être préalablement écrites dans un premier espace d'adressage local puis réorganisées dans un deuxième espace d'adressage local, doublant ainsi l'espace d'adressage nécessaire. Même en transposant éventuellement l'enseignement du document Martin et al précité en réception par symétrie, l'emploi nécessaire d'une mémoire tampon supplémentaire interne au contrôleur DMA double l'espace de stockage occupé dans le noeud de calcul récepteur des données.

Une solution est suggérée dans l'article de Dupont de Dinechin et al, intitulé « A clustered manycore processor architecture for embedded and accelerated applications », publié à l'occasion de la conférence HPEC 2013 qui s'est tenue à Waltham, MA (USA) du 10 au 12 septembre 2013. Elle consisterait à ajouter, en tant que méta-données, des indications explicites de sauts d'adresses de destination applicables au moins aux premières données de chaque paquet reçu. Mais pour les réorganisations complexes, une telle méthode est susceptible de conduire à des transmissions de trop grandes quantités de méta-données en plus des données elles-mêmes.

Il peut ainsi être souhaité de concevoir un contrôleur d'accès direct en mémoire qui permette de s'affranchir d'au moins une partie des problèmes et contraintes précités.

Il est donc proposé un contrôleur d'accès direct en mémoire destiné à être introduit dans un noeud de calcul d'un système sur puce, comportant :
- une mémoire tampon d'entrée pour la réception de paquets de données à traiter provenant d'une interface d'entrées/sorties du noeud de calcul,
- un module de gestion d'écriture des données à traiter extraites de chaque paquet dans un espace d'adressage local du noeud de calcul, cet espace d'adressage local étant partagé par au moins un processeur de traitement desdites données autre que le contrôleur d'accès direct en mémoire,
- une unité arithmétique et logique d'exécution de microprogrammes, et
- un registre de stockage d'au moins un microprogramme,
comportant au moins un microprogramme stocké en registre, constitué de lignes d'instructions de calculs arithmétiques et/ou logiques portant uniquement sur des adresses de stockage des données à traiter reçues par la mémoire tampon d'entrée pour une réorganisation de celles-ci dans l'espace d'adressage local partagé, le module de gestion d'écriture étant conçu pour commander l'exécution dudit au moins un microprogramme par l'unité arithmétique et logique.

Ainsi, en microprogrammant explicitement la réorganisation des adresses de données en réception, c'est-à-dire au plus près des traitements qui doivent leur être appliqués, pour une exécution de cette réorganisation par l'unité arithmétique et logique du contrôleur d'accès direct en mémoire commandée par son module de gestion d'écriture, elle est réalisée à la volée et directement établie dans l'espace d'adressage local partagé sans duplication des données. En d'autres termes, elle peut se faire au niveau protocolaire « transport » du modèle standard de communication OSI (de l'anglais « Open Systems Interconnection ») en opérant directement sur les adresses de données sans besoin de stockage intermédiaire des données elles-mêmes. Lorsque l'on sait que pour bon nombre de traitements, par exemple le codage d'images par transformation en ondelettes qui nécessite des transpositions matricielles pour réaliser les filtrages horizontaux et verticaux, la réorganisation des données peut occuper quasiment autant d'espace mémoire et de temps de calcul que leur traitement, on gagne ainsi environ un tiers d'espace en mémoire locale et on divise le temps de calcul par deux.

De façon optionnelle :
- plusieurs microprogrammes sont stockés en registre et associés respectivement à plusieurs identifiants,
- le module de gestion d'écriture est conçu pour sélectionner, pour chaque paquet de données à traiter reçu, l'un des microprogrammes sur la base d'une correspondance entre l'identifiant qui lui est associé et un identifiant inclus dans un en-tête de chaque paquet de données à traiter.

De façon optionnelle également :
- ledit au moins un microprogramme stocké en registre comporte des paramètres d'exécution à définir,
- le module de gestion d'écriture est conçu pour définir au moins une partie de ces paramètres d'exécution à partir de données d'exécution incluses dans un en-tête de chaque paquet de données à traiter.

De façon optionnelle également, les paramètres d'exécution à définir comportent des paramètres de traitement d'images incluant au moins l'un des éléments de l'ensemble constitué de :
- taille(s) de lignes ou de colonnes de blocs d'images, et
- nombre(s) de données à traiter successives devant être écrites à des adresses successives de l'espace d'adressage local partagé.

De façon optionnelle également, le module de gestion d'écriture est conçu pour commander l'exécution de plusieurs microprogrammes en parallèle sur plusieurs canaux d'exécution différents, identifiés chacun par un identifiant de canal inclus dans chaque paquet de données à traiter, et pour réserver plusieurs sous-espaces d'adressages respectivement associés à ces canaux d'exécution dans l'espace d'adressage local partagé.

De façon optionnelle également, ledit au moins un microprogramme stocké en registre comporte des lignes d'instructions de calculs arithmétiques et/ou logiques visant à opérer une transposition matricielle entre les données à traiter telles que reçues par la mémoire tampon d'entrée et les mêmes données à traiter telles que réorganisées et écrites dans l'espace d'adressage local partagé.

De façon avantageuse, au moins deux modes de fonctionnement dudit au moins un microprogramme stocké en registre sont paramétrables :
- un premier mode de redémarrage dans lequel chaque exécution dudit au moins un microprogramme sur un paquet de données à traiter démarre sur un nouveau contexte d'exécution, et
- un deuxième mode de pause dans lequel chaque exécution dudit au moins un microprogramme sur un paquet de données à traiter démarre sur un contexte d'exécution du paquet de données à traiter précédent dans l'ordre de réception des paquets par la mémoire tampon d'entrée.

De façon optionnelle également, deux modes d'écriture du module de gestion d'écriture sont paramétrables par un identifiant inclus dans un en-tête de chaque paquet de données à traiter :
- un premier mode d'écriture séquentielle dans lequel les données à traiter de chaque paquet indiquant ce premier mode sont écrites dans l'espace d'adressage local partagé à partir d'une adresse relative définie comme étant contiguë à la dernière adresse à laquelle a été écrite une donnée à traiter du paquet de données à traiter précédent dans l'ordre de réception des paquets par la mémoire tampon d'entrée, et
- un deuxième mode d'écriture à décalage absolu dans lequel les données à traiter de chaque paquet indiquant ce deuxième mode sont écrites dans l'espace d'adressage local partagé à partir d'une adresse relative définie par un décalage, également indiqué dans un en-tête de ce paquet, à une adresse prédéterminée de référence de l'espace d'adressage local partagé.

Il est également proposé un dispositif de traitement de données à réseau sur puce, comportant :
- un réseau d'interconnexion de noeuds de calcul pour l'échange de paquets de données entre eux ou avec au moins un périphérique, et
- une pluralité de noeuds de calcul comportant chacun :
   - une interface d'entrées/sorties de paquets de données,
   - un espace d'adressage local partagé,
   - un contrôleur d'accès direct en mémoire selon l'invention, pour un accès direct en écriture, dans l'espace d'adressage local partagé, de données extraites de paquets reçus par sa mémoire tampon d'entrée, et
   - au moins un processeur de traitement de données, autre que le contrôleur d'accès direct en mémoire, pour un traitement des données écrites par le contrôleur d'accès direct en mémoire dans l'espace d'adressage local partagé.

Il est également proposé un procédé de réception et de stockage de données par un noeud de calcul d'un dispositif de traitement de données à réseau sur puce, comportant les étapes suivantes :
- réception, via une interface d'entrées/sorties du noeud de calcul, par une mémoire tampon d'entrée d'un contrôleur d'accès direct en mémoire du noeud de calcul, de paquets de données à traiter,
- extraction des données à traiter de chaque paquet par le contrôleur d'accès direct en mémoire,
- écriture, par le contrôleur d'accès direct en mémoire, des données à traiter reçues et extraites dans un espace d'adressage local du noeud de calcul, cet espace d'adressage local étant partagé par au moins un processeur de traitement desdites données autre que le contrôleur d'accès direct en mémoire,
comportant en outre les étapes suivantes :
- exécution, par une unité arithmétique et logique du contrôleur d'accès direct en mémoire, d'au moins un microprogramme constitué de lignes d'instructions de calculs arithmétiques et/ou logiques portant uniquement sur des adresses de stockage des données à traiter reçues et extraites pour une réorganisation de celles-ci dans l'espace d'adressage local partagé, et
- écriture des données reçues et extraites dans l'espace d'adressage local partagé à des adresses obtenues par ladite réorganisation.

L'invention sera mieux comprise à l'aide de la description qui va suivre, et faite en se référant aux dessins annexés dans lesquels :
- la figure 1 représente schématiquement la structure générale d'un dispositif de traitement de données à réseau sur puce, selon un mode de réalisation de l'invention,
- la figure 2 représente schématiquement la structure générale d'un contrôleur d'accès direct en mémoire du dispositif de traitement de la figure 1, selon un mode de réalisation de l'invention,
- la figure 3 illustre un exemple de configuration d'un paquet de données à traiter pouvant être reçu et transmis, à une mémoire locale partagée, par le contrôleur d'accès direct en mémoire de la figure 2, et
- la figure 4 illustre les étapes successives d'un procédé de réception et de stockage de données à traiter par l'un quelconque des noeuds de calcul du dispositif de la figure 1.

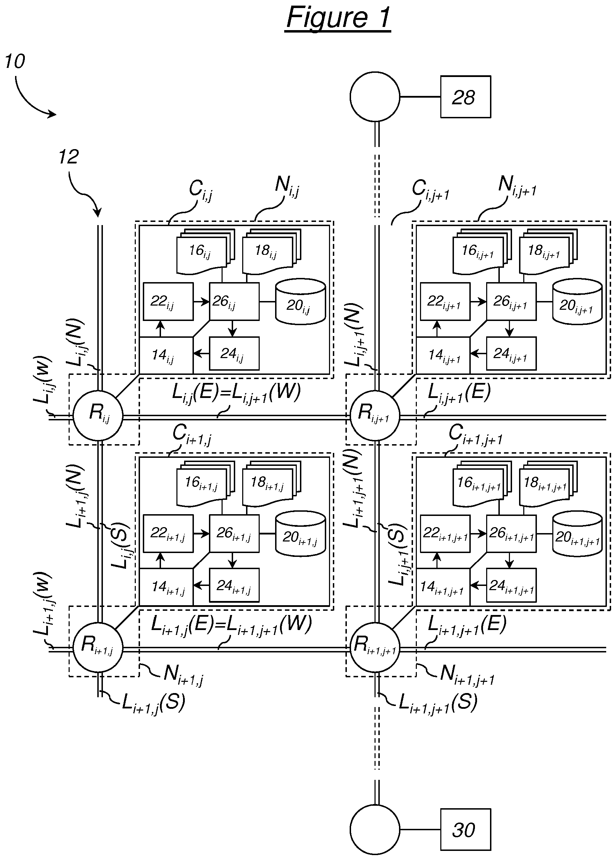

Le dispositif 10 de traitement de données illustré sur la figure 1 comporte un réseau sur puce partiellement représenté. Ce réseau sur puce, réalisé sous la forme d'un circuit intégré, est constitué d'une pluralité de noeuds disposés en matrice et interconnectés entre eux par des liens bidirectionnels orientés dans quatre directions matricielles Nord (N), Sud (S), Ouest (W) et Est (E). Les liens permettent la transmission de paquets de données d'un noeud à l'autre et forment un réseau d'interconnexion 12.

Dans l'exemple de la figure 1, seuls quatre noeuds sont représentés de façon non limitative et notés N_{i,j}, N_{i,j+1}, N_{i+1,j} et N_{i+1,j+1}. Quatre liens bidirectionnels L_{i,j}(N), L_{i,j}(S), L_{i,j}(W) et L_{i,j}(E) partent du noeud N_{i,j} dans les quatre directions précitées. Quatre liens bidirectionnels L_{i,j+1}(N), L_{i,j+1}(S), L_{i,j+1}(W) et L_{i,j+1}(E) partent du noeud N_{i,j+1} dans les quatre directions précitées. Quatre liens bidirectionnels L_{i+1,j}(N), L_{i+1,j}(S), L_{i+1,j}(W) et L_{i+1,j}(E) partent du noeud N_{i+1,j} dans les quatre directions précitées. Enfin, quatre liens bidirectionnels L_{i+1,j+1}(N), L_{i+1,j+1}(S), L_{i+1,j+1}(W) et L_{i+1,j+1}(E) partent du noeud N_{i+1,j+1} dans les quatre directions précitées. On notera que le lien bidirectionnel L_{i,j}(E) correspond au lien bidirectionnel L_{i,j+1}(W), que le lien bidirectionnel L_{i+1,j}(E) correspond au lien bidirectionnel L_{i+1,j+1}(W), que le lien bidirectionnel L_{i,j}(S) correspond au lien bidirectionnel L_{i+1,j}(N) et que le lien bidirectionnel L_{i,j+1}(S) correspond au lien bidirectionnel L_{i+1,j+1}(N).

Le noeud N_{i,j} comporte plus précisément un noeud de calcul C_{i,j} et un routeur R_{i,j}. La fonction du routeur R_{i,j}, est d'orienter chaque paquet de données qu'il reçoit du noeud de calcul C_{i,j} ou de l'une des quatre directions précitées vers l'une des quatre directions précitées ou le noeud de calcul C_{i,j}. De façon bien connue, le noeud de calcul C_{i,j} comporte une interface réseau 14_{i,j} d'entrées/sorties de paquets de données, apte à communiquer avec le routeur R_{i,j}. Il comporte en outre par exemple un ensemble de processeurs microprogrammables 16_{i,j} et un ensemble d'accélérateurs dédiés 18_{i,j} pour un traitement de données contenues dans les paquets reçus via l'interface réseau 14_{i,j}. Il comporte en outre une mémoire locale 20_{i,j} partagée par les processeurs 16_{i,j} et accélérateurs 18_{i,j} pour l'exécution de leurs traitements. Les données à traiter contenues dans les paquets reçus via l'interface réseau 14_{i,j} sont destinées à y être stockées. Cette mémoire locale partagée 20_{i,j} est illustrée sous la forme d'une seule ressource de stockage dans la figure 1, mais elle pourrait être constituée de plusieurs mémoires différentes, toutes partagées localement. D'une façon plus générale, elle couvre toute notion d'espace d'adressage local accessible en lecture et écriture par les processeurs 16_{i,j} et accélérateurs 18_{i,j}.

Le noeud de calcul C_{i,j} comporte en outre un contrôleur d'accès direct en mémoire ou contrôleur DMA qui est fonctionnellement scindé en deux sur la figure 1 mais peut-être concrètement implémenté sous la forme d'un processeur dédié aux transferts de données entre la mémoire locale partagée 20_{i,j} du noeud de calcul C_{i,j} et le reste du réseau : un contrôleur DMA de réception de données à traiter par les processeurs 16_{i,j} et accélérateurs 18_{i,j}, portant la référence 22_{i,j}, et un contrôleur DMA d'émission de données traitées par les processeurs 16_{i,j} et accélérateurs 18_{i,j}, portant la référence 24_{i,j}. Le contrôleur DMA de réception 22_{i,j} est conçu et microprogrammé pour recevoir des données à traiter en provenance de l'interface réseau 14_{i,j} et pour les écrire dans un espace d'adressage dédié de la mémoire locale partagée 20_{i,j}. Le contrôleur DMA d'émission 24_{i,j} est conçu et microprogrammé pour lire des données traitées, placées en mémoire locale partagée 20_{i,j} par les processeurs 16_{i,j} et accélérateurs 18_{i,j}, et pour les diriger vers un autre noeud de calcul du dispositif de traitement 10 ou vers un périphérique via l'interface réseau 14_{i,j}.

Tous les éléments fonctionnels précités 14_{i,j}, 16_{i,j}, 18_{i,j}, 20_{i,j}, 22_{i,j} et 24_{i,j} du noeud de calcul C_{i,j} sont raccordés à un bus interne 26_{i,j} de transmission de données à l'aide duquel ils peuvent communiquer entre eux, notamment pour faciliter et accélérer les accès en mémoire locale.

Comme le noeud N_{i,j}, le noeud N_{i,j+1} comporte un noeud de calcul C_{i,j+1} et un routeur R_{i,j+1}, le noeud de calcul C_{i,j+1} comportant une interface réseau 14_{i,j+1}, un ensemble de processeurs microprogrammables 16_{i,j+1}, un ensemble d'accélérateurs dédiés 18_{i,j+1}, une mémoire locale partagée 20_{i,j+1}, un contrôleur DMA 22_{i,j+1} de réception de données à traiter, un contrôleur DMA 24_{i,j+1} d'émission de données traitées et un bus interne 26_{i,j+1}. De même, le noeud N_{i+1,j} comporte un noeud de calcul C_{i+1,j} et un routeur R_{i+1,j}, le noeud de calcul C_{i+1,j} comportant une interface réseau 14_{i+1,j}, un ensemble de processeurs microprogrammables 16_{i+1,j}, un ensemble d'accélérateurs dédiés 18_{i+1,j}, une mémoire locale partagée 20_{i+1,j}, un contrôleur DMA 22_{i+1,j} de réception de données à traiter, un contrôleur DMA 24_{i+1,j} d'émission de données traitées et un bus interne 26_{i+1,j}. De même, le noeud N_{i+1,j+1} comporte un noeud de calcul C_{i+1,j+1} et un routeur R_{i+1,j+1}, le noeud de calcul C_{i+1,j+1} comportant une interface réseau 14_{i+1,j+1}, un ensemble de processeurs microprogrammables 16_{i+1,j+1}, un ensemble d'accélérateurs dédiés 18_{i+1,j+1}, une mémoire locale partagée 20_{i+1,j+1}, un contrôleur DMA 22_{i+1,j+1} de réception de données à traiter, un contrôleur DMA 24_{i+1,j+1} d'émission de données traitées et un bus interne 26_{i+1,j+1}.

Le dispositif de traitement 10 comporte en outre un ou plusieurs périphériques connectés à un ou plusieurs noeuds du réseau sur puce. Deux sont illustrés sur la figure 1, par exemple un serveur hôte 28 et une mémoire distante 30, par exemple associée à ce serveur hôte 28, de type DRAM (de l'anglais « Dynamic Random Access Memory »).

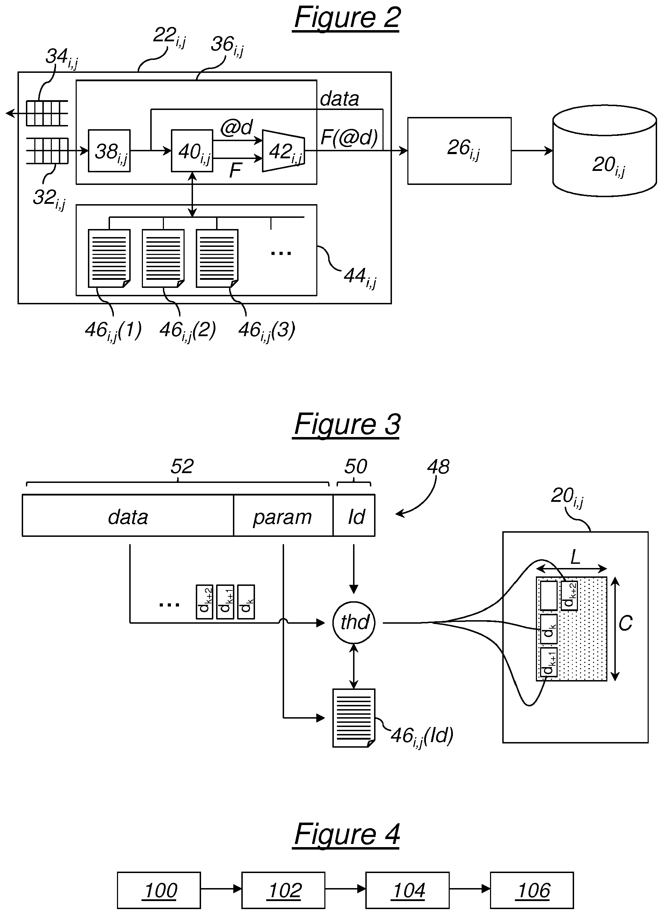

L'architecture générale du contrôleur DMA de réception 22_{i,j} du noeud de calcul C_{i,j} va maintenant être détaillée en référence à la figure 2. Elle s'applique à tous les autres contrôleurs DMA de réception des autres noeuds de calcul du dispositif de traitement 10.

Le contrôleur DMA de réception 22_{i,j} comporte tout d'abord une mémoire tampon d'entrée 32_{i,j} pour la réception de paquets de données à traiter transmis par le routeur R_{i,j} via l'interface réseau 14_{i,j}. Sa fonction principale est d'écrire les données à traiter contenues dans les paquets qu'il reçoit dans des espaces d'adressages dédiés de la mémoire locale partagée 20_{i,j}. De façon avantageuse, cette mémoire tampon d'entrée 32_{i,j} est aussi petite que possible, ce qui ne facilite pas la gestion des fluctuations entrantes. Or la latence entre cette mémoire tampon et la mémoire locale partagée 20_{i,j} est également un paramètre critique qu'il est important de réduire. Il convient donc en pratique d'anticiper les changements de contextes entre paquets reçus pour éviter des pertes de cycles d'horloge tout en ayant opté pour une réalisation efficace et économe en mémoire.

Le contrôleur DMA de réception 22_{i,j} comporte en outre une mémoire tampon de sortie 34_{i,j} pour l'envoi, vers le réseau sur puce à partir du routeur R_{i,j} via l'interface réseau 14_{i,j}, d'informations diverses conformes aux protocoles de communication ou de lecture/écriture mis en oeuvre et résultant de ses opérations d'écriture dans la mémoire locale partagée 20_{i,j}.

Il comporte en outre un module 36_{i,j} de gestion des écritures dans la mémoire locale partagée 20_{i,j}. Ce module 36_{i,j} a plus précisément pour fonction d'extraire les données à traiter de chaque paquet reçu séquentiellement par la mémoire tampon d'entrée 32_{i,j} et de les orienter vers un espace d'adressage correspondant en mémoire locale partagée 20_{i,j} pour leur traitement ultérieur par au moins l'un des processeurs microprogrammables 16_{i,j} et accélérateurs 18_{i,j}. Selon un mode de réalisation non limitatif tel qu'illustré sur la figure 2, il est configuré en pipeline à trois cycles et comporte pour cela trois unités électronique successives. Une première unité de chargement 38_{i,j} a pour fonction d'extraire les données à traiter de chaque paquet, identifiées par la référence globale « data » dans la figure 2, et d'extraire en outre un certain nombre de paramètres d'exécution d'un microprogramme à sélectionner pour chaque paquet. Une deuxième unité de décodage 40_{i,j} a pour fonction de récupérer les paramètres d'exécution issus de l'unité de chargement 38_{i,j} ainsi que des adresses de stockage @d des données à traiter « data », et de créer un fil d'instructions (de l'anglais « thread ») pour chaque paquet, ce fil d'instructions étant défini, à partir d'un microprogramme à sélectionner par l'unité de décodage 40_{i,j}, pour opérer des calculs arithmétiques et/ou logiques de réorganisation F portant uniquement sur les adresses de stockage @d des données à traiter « data » pour une réorganisation de celles-ci dans la mémoire locale partagée 20_{i,j}. Ce fil d'instructions possède et gère ses propres pointeurs d'écriture et a la capacité de procéder à des sauts en mémoire à l'aide de fonctions arithmétiques et logiques simples, telles que des boucles ou instructions «goto», des additions ou soustractions sur adresses, etc., par exemple. Enfin, une troisième unité arithmétique et logique 42_{i,j} a pour fonction d'exécuter le fil d'instruction créé par l'unité de décodage 40_{i,j} pour réaliser les calculs arithmétiques et/ou logiques de réorganisation F sur les adresses @d et obtenir ainsi de nouvelles adresses réorganisées F(@d) d'écriture des données « data » dans la mémoire locale partagée 20_{i,j}.

Le contrôleur DMA de réception 22_{i,j} comporte en outre un registre 44_{i,j} de stockage d'au moins un microprogramme. Plusieurs microprogrammes 46_{i,j}(1), 46_{i,j}(2), 46_{i,j}(3), ... sont ainsi stockés en registre et associés respectivement à plusieurs identifiants permettant de les distinguer.

Comme illustré sur la figure 3, un paquet de données 48 reçu par la mémoire tampon d'entrée 32_{i,j} du contrôleur DMA de réception 22_{i,j} comporte, au niveau protocolaire « transport » du modèle OSI, un en-tête principal 50 et une charge utile 52 (de l'anglais « pay load »). Lorsque plusieurs microprogrammes potentiellement exécutables par le contrôleur DMA de réception 22_{i,j} sont stockés en registre, l'en-tête principal 50 comporte un identifiant « Id » permettant au module 36_{i,j} de gestion d'écriture de sélectionner l'un de ces microprogrammes 46_{i,j}(1), 46_{i,j}(2), 46_{i,j}(3), .... Cet identifiant « Id » est par exemple l'adresse à laquelle le microprogramme correspondant peut être trouvé en registre 44_{i,j}. On notera 46_{i,j}(Id) ce microprogramme. La charge utile 52 peut optionnellement comporter, outre les données à traiter « data », un en-tête secondaire incluant des données « param » remplissant une fonction de paramétrage du microprogramme sélectionné 46_{i,j}(Id) ou de son exécution. Ainsi par exemple, le microprogramme sélectionné 46_{i,j}(Id) peut comporter des paramètres d'exécution restant à définir, ceux-ci étant alors définis par des valeurs indiquées dans l'en-tête secondaire du paquet 48. Le module 36_{i,j} de gestion d'écriture est conçu pour attribuer ces valeurs aux paramètres correspondants du microprogramme sélectionné 46_{i,j}(Id) lorsque son unité de décodage 40_{i,j} crée le fil d'instructions « thd » destiné à exécuter ce microprogramme sur les adresses de destination des données à traiter « data ». En particulier, lorsque les données à traiter « data » sont des données d'images, par exemple des valeurs de pixels, et que les paramètres d'exécution à définir sont des paramètres de traitement d'image concernant une réorganisation des pixels, ils peuvent comporter des tailles (L, C) de lignes ou de colonnes de blocs d'images, ou des nombres de données à traiter successives devant être écrites à des adresses successives de la mémoire locale partagée 20_{i,j}, ou des incréments/décréments d'adresses. Dans ce cas également, comme illustré à titre d'exemple sur la figure 3 par quelques données à traiter portant les références dₖ, dₖ₊₁, dₖ₊₂, les lignes d'instructions de calculs arithmétiques et/ou logiques du microprogramme sélectionné 46_{i,j}(Id) peuvent viser à opérer une transposition matricielle entre les données à traiter telles que reçues par la mémoire tampon d'entrée 32_{i,j} et les mêmes données à traiter telles que réorganisées et écrites dans la mémoire locale partagée 20_{i,j}. C'est particulièrement utile en compression d'image par ondelettes pour réaliser les filtrages successivement horizontaux et verticaux.

De façon avantageuse, le microprogramme sélectionné 46_{i,j}(Id) peut fonctionner selon au moins deux modes différents paramétrables :
- un premier mode de redémarrage dans lequel chaque exécution par le fil d'instructions « thd » de ce microprogramme sur un paquet de données à traiter démarre sur un nouveau contexte d'exécution, et
- un deuxième mode de pause dans lequel chaque exécution par le fil d'instructions « thd » de ce microprogramme sur un paquet de données à traiter démarre sur un contexte d'exécution du paquet de données à traiter précédent dans l'ordre de réception des paquets par la mémoire tampon d'entrée 32_{i,j}.

Un paramètre correspondant de mode de fonctionnement peut être défini dans le paquet 48, en en-tête principal 50 ou secondaire. Ce paramètre peut également être directement accessible en registre 44_{i,j}, par exemple via une interface MMIO (de l'anglais « Memory-Mapped I/O »), par un utilisateur, par les processeurs microprogrammables 16_{i,j} ou par les accélérateurs 18_{i,j}.

De façon optionnelle également, le module 36_{i,j} de gestion d'écriture peut fonctionner selon au moins deux modes différents d'écriture :
- un premier mode d'écriture séquentielle dans lequel les données à traiter « data » de chaque paquet sur lequel s'applique ce premier mode sont écrites dans la mémoire locale partagée 20_{i,j} à partir d'une adresse relative définie comme étant contiguë à la dernière adresse à laquelle a été écrite une donnée à traiter du paquet de données à traiter précédent dans l'ordre de réception des paquets par la mémoire tampon d'entrée 36_{i,j}, et
- un deuxième mode d'écriture à décalage absolu dans lequel les données à traiter « data » de chaque paquet sur lequel s'applique ce deuxième mode sont écrites dans la mémoire locale partagée 20_{i,j} à partir d'une adresse relative définie par un décalage, indiqué dans un en-tête (principal ou secondaire) de ce paquet, à une adresse prédéterminée de référence de la mémoire locale partagée 20_{i,j}.

Un paramètre correspondant de mode d'écriture peut être défini dans le paquet 48, en en-tête principal 50 ou secondaire. Ce paramètre peut également être directement accessible en registre 44_{i,j} par un utilisateur, par les processeurs microprogrammables 16i,j ou par les accélérateurs 18i,j.

On notera que rien n'empêche le module 36_{i,j} de gestion d'écriture de traiter plusieurs paquets de données à la fois, notamment grâce à son architecture en pipeline. Dans ce cas, il est avantageusement conçu pour commander l'exécution de plusieurs microprogrammes en parallèle sur plusieurs canaux virtuels d'exécution différents, identifiés chacun par un identifiant de canal inclus dans chaque paquet de données à traiter (en en-tête principal par exemple). Il suffit en effet de permettre la création de plusieurs fils d'instructions « thd » en parallèle, chacun étant associé à un canal d'exécution. A chaque canal d'exécution peut en outre être associée une mémoire tampon d'entrée 32_{i,j} et une mémoire tampon de sortie 34_{i,j}. De même, à chaque canal d'exécution est associé un espace d'adressage qui lui est spécifiquement dédié dans la mémoire locale partagée 20_{i,j}.

On notera également que chaque microprogramme est en fait un noyau logiciel (de l'anglais « kernel ») paramétrique pouvant être sollicité à la réception de chaque paquet et complété lors de son exécution par un fil d'instructions à l'aide des paramètres renseignés dans chaque paquet. Il peut être précompilé et stocké sous forme de code binaire en registre 44_{i,j}. Avantageusement, il est implémenté sous la forme d'une interface de programmation applicative API (de l'anglais « Application Programming Interface ») pour éviter tout risque d'inconsistence entre microprogrammes et configurations lors de leurs exécutions.

Conformément à l'architecture qui a été détaillée précédemment en référence aux figures 1 à 3, un procédé de réception et de stockage de données par un noeud de calcul C_{i,j} quelconque du dispositif 10 de traitement de données à réseau sur puce 12 va maintenant être décrit.

Au cours d'une première étape 100, des paquets de données concernant un canal d'exécution donné sont reçus, via l'interface réseau 14_{i,j} du noeud de calcul C_{i,j}, par la mémoire tampon d'entrée 32_{i,j} dédiée à ce canal d'exécution. Comme précisé ci-dessus, plusieurs mémoires tampons d'entrée respectivement dédiées à plusieurs canaux d'exécution peuvent être prévues dans le contrôleur DMA de réception 22_{i,j}.

Au cours d'une étape suivante 102, les données à traiter « data » sont extraites de chaque paquet reçu par la première unité de chargement 38_{i,j}, de même que les paramètres « Id » et « param » permettant de sélectionner le microprogramme correspondant au canal d'exécution considéré, de le paramétrer complètement ainsi que son fonctionnement et le mode d'exécution ou écriture souhaité.

Au cours d'une étape suivante 104, un fil d'instruction « thd » est créé par l'unité de décodage 40_{i,j}, sur la base des paramètres « Id » et « param », et est exécuté par l'unité arithmétique et logique 42_{i,j} pour une réorganisation F des adresses de destination @d des données à traiter « data » dans la mémoire locale partagée 20_{i,j}. Comme indiqué précédemment, les lignes d'instructions du microprogramme sélectionné portent uniquement sur des calculs arithmétiques et/ou logiques dont les opérandes sont des adresses de stockage de ces données « data » en mémoire locale partagée 20_{i,j}. La réorganisation des données à traiter « data » se fait donc à la volée sans duplication de ces dernières dans l'un quelconque des espaces d'adressage du contrôleur DMA de réception 22_{i,j} ou auxquels il a accès.

Enfin, au cours d'une dernière étape 106, le fil d'instruction créé « thd » écrit les données à traiter « data » aux adresses réorganisées F(@d) dans un espace d'adressage dédié de la mémoire locale partagée 20_{i,j}.

Compte tenu de l'architecture en pipeline du module 36_{i,j} de gestion d'écriture, les étapes 100 à 106 s'exécutent en fait continûment de façon entrelacée.

On notera également que l'exécution de ces étapes peut se faire par une exécution logicielle d'un ou plusieurs programmes d'ordinateurs comprenant des instructions définies pour cela, le contrôleur DMA de réception 22_{i,j} pouvant être matérialisé par un « ordinateur » de type microprocesseur programmable. Les fonctions réalisées par ces programmes pourraient aussi être au moins en partie micro programmées ou micro câblées dans des circuits intégrés dédiés. Ainsi, en variante, le dispositif informatique mettant en oeuvre le contrôleur DMA de réception 22_{i,j} pourrait être remplacé par un dispositif électronique composé uniquement de circuits numériques (sans programme d'ordinateur) pour la réalisation des mêmes actions.

Il apparaît clairement qu'un dispositif tel que celui décrit précédemment permet une réorganisation efficace de données transmises par contrôleurs DMA entre noeuds de calcul d'un réseau sur puce, à la réception de ces données par les noeuds de calcul qui doivent les traiter et sans augmentation des besoins en stockage local. Dans des applications de traitement d'images par compression impliquant par exemple des traitements par DCT (de l'anglais « Discrète Cosine Transform ») ou par ondelettes, les gains en temps de calcul des processeurs de traitement des données et en espace de stockage sont très sensibles et très importants grâce à la mise en oeuvre des principes généraux de la présente invention. En particulier, elle trouve des applications particulièrement prometteuses dans les dispositifs à coeurs de calcul distribués fonctionnant à basse fréquence de calcul pour une faible consommation d'énergie, ce qui est caractéristique du domaine applicatif de l'IoT audio ou vidéo : consommation énergétique comprise entre 100 mW et quelques Watts, mémoire sur puce inférieure à 1 MB, mémoire externe optionnelle entre 256 kB et 1 MB, circuit intégré de petite taille. Parmi ces applications, on peut citer la vision par ordinateur, la reconnaissance de parole, la photographie numérique, la détection ou reconnaissance de visages, etc.

## Revendications

1. Contrôleur d'accès direct en mémoire (22_{i,j}) destiné à être introduit dans un noeud de calcul (C_{i,j}) d'un système sur puce (12), comportant :
- une mémoire tampon d'entrée (32_{i,j}) pour la réception de paquets de données à traiter provenant d'une interface d'entrées/sorties (14_{i,j}) du noeud de calcul (C_{i,j}),
- un module (36_{i,j}) de gestion d'écriture des données à traiter extraites de chaque paquet dans un espace d'adressage local (20_{i,j}) du noeud de calcul (C_{i,j}), cet espace d'adressage local (20_{i,j}) étant partagé par au moins un processeur (16_{i,j}, 18_{i,j}) de traitement desdites données autre que le contrôleur d'accès direct en mémoire (22_{i,j}),
- une unité arithmétique et logique (42_{i,j}) d'exécution de microprogrammes, et
- un registre (44_{i,j}) de stockage d'au moins un microprogramme, comportant au moins un microprogramme (46_{i,j}(1), 46_{i,j}(2), 46_{i,j}(3)), stocké en registre (44_{i,j}), constitué de lignes d'instructions de calculs arithmétiques et/ou logiques, le module (36_{i,j}) de gestion d'écriture étant conçu pour commander l'exécution dudit au moins un microprogramme (46_{i,j}(1), 46_{i,j}(2), 46_{i,j}(3)) par l'unité arithmétique et logique (42_{i,j}), dans quoi les lignes d'instructions dudit au moins un microprogramme (46_{i,j}(1), 46_{i,j}(2), 46_{i,j}(3)) portent uniquement sur des adresses (@d) de stockage des données à traiter reçues par la mémoire tampon d'entrée (32_{i,j}) pour une réorganisation (F) de celles-ci dans l'espace d'adressage local partagé (20_{i,j}), et dans quoi au moins deux modes de fonctionnement dudit au moins un microprogramme (46_{i,j}(1), 46_{i,j}(2), 46_{i,j}(3)) sont paramétrables :
- un premier mode de redémarrage dans lequel chaque exécution dudit au moins un microprogramme (46_{i,j}(1), 46_{i,j}(2), 46_{i,j}(3)) sur un paquet de données à traiter démarre sur un nouveau contexte d'exécution, et
- un deuxième mode de pause dans lequel chaque exécution dudit au moins un microprogramme (46_{i,j}(1), 46_{i,j}(2), 46_{i,j}(3)) sur un paquet de données à traiter démarre sur un contexte d'exécution du paquet de données à traiter précédent dans l'ordre de réception des paquets par la mémoire tampon d'entrée (32_{i,j}).

2. Contrôleur d'accès direct en mémoire (22_{i,j}) selon la revendication 1, dans lequel :
- plusieurs microprogrammes (46_{i,j}(1), 46_{i,j}(2), 46_{i,j}(3)) sont stockés en registre (44_{i,j}) et associés respectivement à plusieurs identifiants,
- le module (36_{i,j}) de gestion d'écriture est conçu pour sélectionner, pour chaque paquet de données à traiter (48) reçu, l'un des microprogrammes (46_{i,j}(1), 46_{i,j}(2), 46_{i,j}(3)) sur la base d'une correspondance entre l'identifiant qui lui est associé et un identifiant (Id) inclus dans un en-tête (50) de chaque paquet de données à traiter (48).

3. Contrôleur d'accès direct en mémoire (22_{i,j}) selon la revendication 1 ou 2, dans lequel :
- ledit au moins un microprogramme (46_{i,j}(1), 46_{i,j}(2), 46_{i,j}(3)) stocké en registre (44_{i,j}) comporte des paramètres d'exécution à définir,
- le module (36_{i,j}) de gestion d'écriture est conçu pour définir au moins une partie de ces paramètres d'exécution à partir de données d'exécution (param) incluses dans un en-tête de chaque paquet de données à traiter (48).

4. Contrôleur d'accès direct en mémoire (22_{i,j}) selon la revendication 3, dans lequel les paramètres d'exécution à définir comportent des paramètres de traitement d'images incluant au moins l'un des éléments de l'ensemble constitué de :
- taille(s) de lignes (L) ou de colonnes (C) de blocs d'images, et
- nombre(s) de données à traiter successives devant être écrites à des adresses successives de l'espace d'adressage local partagé (20_{i,j}).

5. Contrôleur d'accès direct en mémoire (22_{i,j}) selon l'une quelconque des revendications 1 à 4, dans lequel le module (36_{i,j}) de gestion d'écriture est conçu pour commander l'exécution de plusieurs microprogrammes en parallèle sur plusieurs canaux d'exécution différents, identifiés chacun par un identifiant de canal inclus dans chaque paquet de données à traiter (48), et pour réserver plusieurs sous-espaces d'adressages respectivement associés à ces canaux d'exécution dans l'espace d'adressage local partagé (20_{i,j}).

6. Contrôleur d'accès direct en mémoire (22_{i,j}) selon l'une quelconque des revendications 1 à 5, dans lequel ledit au moins un microprogramme (46_{i,j}(1), 46_{i,j}(2), 46_{i,j}(3)) stocké en registre (44_{i,j}) comporte des lignes d'instructions de calculs arithmétiques et/ou logiques visant à opérer une transposition matricielle entre les données à traiter telles que reçues par la mémoire tampon d'entrée (32_{i,j}) et les mêmes données à traiter telles que réorganisées et écrites dans l'espace d'adressage local partagé (20_{i,j}).

7. Contrôleur d'accès direct en mémoire (22_{i,j}) selon l'une quelconque des revendications 1 à 6, dans lequel deux modes d'écriture du module (36_{i,j}) de gestion d'écriture sont paramétrables par un identifiant inclus dans un en-tête de chaque paquet de données à traiter (48) :
- un premier mode d'écriture séquentielle dans lequel les données à traiter de chaque paquet indiquant ce premier mode sont écrites dans l'espace d'adressage local partagé (20_{i,j}) à partir d'une adresse relative définie comme étant contiguë à la dernière adresse à laquelle a été écrite une donnée à traiter du paquet de données à traiter précédent dans l'ordre de réception des paquets par la mémoire tampon d'entrée (32_{i,j}), et
- un deuxième mode d'écriture à décalage absolu dans lequel les données à traiter de chaque paquet indiquant ce deuxième mode sont écrites dans l'espace d'adressage local partagé (20_{i,j}) à partir d'une adresse relative définie par un décalage, également indiqué dans un en-tête de ce paquet, à une adresse prédéterminée de référence de l'espace d'adressage local partagé (20_{i,j}).

8. Dispositif (10) de traitement de données à réseau sur puce, comportant :
- un réseau (12) d'interconnexion de noeuds de calcul (C_{i,j}) pour l'échange de paquets de données entre eux ou avec au moins un périphérique (28, 30), et
- une pluralité de noeuds de calcul (C_{i,j}) comportant chacun :
• une interface d'entrées/sorties (14_{i,j}) de paquets de données,
• un espace d'adressage local partagé (20_{i,j}),
• un contrôleur d'accès direct en mémoire (22_{i,j}) selon l'une quelconque des revendications 1 à 7, pour un accès direct en écriture, dans l'espace d'adressage local partagé (20_{i,j}), de données extraites de paquets reçus par sa mémoire tampon d'entrée (32_{i,j}), et
• au moins un processeur (16_{i,j}, 18_{i,j}) de traitement de données, autre que le contrôleur d'accès direct en mémoire (22_{i,j}), pour un traitement des données écrites par le contrôleur d'accès direct en mémoire (22_{i,j}) dans l'espace d'adressage local partagé (20_{i,j}).

9. Procédé de réception et de stockage de données par un noeud de calcul (C_{i,j}) d'un dispositif (10) de traitement de données à réseau sur puce (12), comportant les étapes suivantes :
- réception (100), via une interface d'entrées/sorties (14_{i,j}) du noeud de calcul (C_{i,j}), par une mémoire tampon d'entrée (32_{i,j}) d'un contrôleur d'accès direct en mémoire (22_{i,j}) du noeud de calcul, de paquets de données à traiter,
- extraction (102) des données à traiter de chaque paquet par le contrôleur d'accès direct en mémoire (22_{i,j}),
- écriture (104, 106), par le contrôleur d'accès direct en mémoire (22_{i,j}), des données à traiter reçues et extraites dans un espace d'adressage local (20_{i,j}) du noeud de calcul (C_{i,j}), cet espace d'adressage local (20_{i,j}) étant partagé par au moins un processeur (16_{i,j}, 18_{i,j}) de traitement desdites données autre que le contrôleur d'accès direct en mémoire (22_{i,j}),
comportant en outre les étapes suivantes :
- exécution (104), par une unité arithmétique et logique (42_{i,j}) du contrôleur d'accès direct en mémoire (22_{i,j}), d'au moins un microprogramme (46_{i,j}(1), 46_{i,j}(2), 46_{i,j}(3)) constitué de lignes d'instructions de calculs arithmétiques et/ou logiques, et
- écriture (106) des données reçues et extraites dans l'espace d'adressage local partagé (20_{i,j}) à des adresses obtenues par ladite réorganisation (F), dans quoi les lignes d'instructions dudit au moins un microprogramme (46_{i,j}(1), 46_{i,j}(2), 46_{i,j}(3)) portent uniquement sur des adresses (@d) de stockage des données à traiter reçues par la mémoire tampon d'entrée (32_{i,j}) pour une réorganisation (F) de celles-ci dans l'espace d'adressage local partagé (20_{i,j}), et dans quoi au moins deux modes de fonctionnement dudit au moins un microprogramme (46_{i,j}(1), 46_{i,j}(2), 46_{i,j}(3)) stocké en registre (44_{i,j}) sont paramétrables :
- un premier mode de redémarrage dans lequel chaque exécution dudit au moins un microprogramme (46_{i,j}(1), 46_{i,j}(2), 46_{i,j}(3)) sur un paquet de données à traiter démarre sur un nouveau contexte d'exécution, et
- un deuxième mode de pause dans lequel chaque exécution dudit au moins un microprogramme (46_{i,j}(1), 46_{i,j}(2), 46_{i,j}(3)) sur un paquet de données à traiter démarre sur un contexte d'exécution du paquet de données à traiter précédent dans l'ordre de réception des paquets par la mémoire tampon d'entrée (32_{i,j}).

## Patentansprüche

1. Steuereinrichtung für direkten Speicherzugang (22_{i,j}) zur Einführung in einen Rechenknoten (C_{i,j}) eines Systems auf einem Chip (12), umfassend:
- Einen Eingabepufferspeicher (32_{i,j}) für den Empfang von zu verarbeitenden Datenpaketen von einer Schnittstelle für die Eingabe/Ausgabe (14_{i,j}) des Rechenknotens (C_{i,j}),
- ein Verwaltungsmodul (36_{i,j}) zum Schreiben der aus jedem Paket extrahierten zu verarbeitenden Daten in einen lokalen Adressraum (20_{i,j}) des Rechenknotens (C_{i,j}), wobei dieser lokale Adressraum (20_{i,j}) von mindestens einem anderen Prozessor (16_{i,j}, 18_{i,j}) zur Verarbeitung der genannten Daten als dem Steuereinrichtung für direkten Speicherzugang (22_{i,j}) gemeinsam genutzt wird,
- eine arithmetische und logische Einheit (42_{i,j}) zur Ausführung von Mikroprogrammen, und
- ein Register (44_{i,j}) zur Speicherung von mindestens einem Mikroprogramm,
mit mindestens einem in einem Register (44_{i,j}) gespeicherten Mikroprogramm (46_{i,j}(1), 46_{i,j}(2), 46_{i,j}(3)), das aus Befehlszeilen für arithmetische und/oder logische Berechnungen besteht, wobei das Verwaltungsmodul (36_{i,j}) zum Schreiben so ausgelegt ist, dass es die Ausführung des mindestens einen Mikroprogramms (46_{i,j}(1), 46_{i,j}(2), 46_{i,j}(3)) durch die arithmetische und logische Einheit (42_{i,j}) steuert, worin die Befehlszeilen des mindestens einen Mikroprogramms (46_{i,j}(1), 46_{i,j}(2), 46_{i,j}(3)) nur Adressen (@d) zur Speicherung von zu verarbeitenden Daten betreffen, die von dem Eingabepufferspeicher (32_{i,j}) für eine Reorganisation (F) derselben in dem gemeinsamen lokalen Adressraum (20_{i,j}) empfangen werden, und worin mindestens zwei Betriebsmodi des mindestens einen Mikroprogramms (46_{i,j}(1), 46_{i,j}(2), 46_{i,j}(3)) parametrierbar sind:
- Ein erster Neustartmodus, bei dem jede Ausführung des mindestens einen Mikroprogramms (46_{i,j}(1), 46_{i,j}(2), 46_{i,j}(3)) auf ein zu verarbeitendes Datenpaket auf einem neuen Ausführungskontext startet, und
- ein zweiter Pausenmodus, in dem jede Ausführung des mindestens einen Mikroprogramms (46_{i,j}(1), 46_{i,j}(2), 46_{i,j}(3)) auf einem zu verarbeitenden Datenpaket auf einem Ausführungskontext des vorhergehenden zu verarbeitenden Datenpakets in der Reihenfolge des Empfangs der Pakete durch den Eingabepufferspeicher (32_{i,j}) gestartet wird.

2. Steuereinrichtung für direkten Speicherzugang (22_{i,j}) nach Anspruch 1, wobei:
- Mehrere Mikroprogramme (46_{i,j}(1), 46_{i,j}(2), 46_{i,j}(3)) in einem Register (44_{i,j}) gespeichert und jeweils mit mehreren Identifikatoren verknüpft werden,
- das Verwaltungsmodul (36_{i,j}) zum Schreiben dazu ausgelegt ist, für jedes empfangene zu verarbeitende Datenpaket (48) eines der Mikroprogramme (46_{i,j}(1), 46_{i,j}(2), 46_{i,j}(3)) auf der Grundlage einer Übereinstimmung zwischen der ihm zugeordneten Kennung und einer Kennung (ld), die in einem Header (50) jedes zu verarbeitenden Datenpakets (48) enthalten ist, auszuwählen.

3. Steuereinrichtung für direkten Speicherzugang (22_{i,j}) nach Anspruch 1 oder 2, wobei:
- Das mindestens eine Mikroprogramm (46_{i,j}(1), 46_{i,j}(2), 46_{i,j}(3)), das in einem Register (44_{i,j}) gespeichert ist, zu definierende Ausführungsparameter aufweist,
- das Verwaltungsmodul (36_{i,j}) zum Schreiben so ausgelegt ist, dass es mindestens einen Teil dieser Ausführungsparameter aus Ausführungsdaten (param) definiert, die in einem Header jedes zu verarbeitenden Datenpakets (48) enthalten sind.

4. Steuereinrichtung für direkten Speicherzugang (22_{i,j}) nach Anspruch 3, wobei die zu definierenden Ausführungsparameter Bildverarbeitungsparameter umfassen, die mindestens eines der Elemente aus der Baugruppe enthalten, bestehend aus:
- Größe(n) der Zeilen (L) oder Spalten (C) von Bildblöcken, und
- Anzahl(en) aufeinanderfolgender zu verarbeitender Daten, die an aufeinanderfolgende Adressen im gemeinsam genutzten lokalen Adressraum (20_{i,j}) geschrieben werden müssen.

5. Steuereinrichtung für direkten Speicherzugang (22_{i,j}) nach einem der Ansprüche 1 bis 4, wobei das Verwaltungsmodul (36_{i,j}) zum Schreiben so ausgelegt ist, dass es die Ausführung verschiedener, jeweils durch eine Kanalkennung identifizierter Kanäle, die in jedem zu verarbeitenden Datenpaket (48) enthalten sind, steuert und mehrere Adressunterräume vorhält, die jeweils diesen Ausführungskanälen im gemeinsam genutzten lokalen Adressraum (20_{i,j}) zugeordnet sind.

6. Steuereinrichtung für direkten Speicherzugang (22_{i,j}) nach einem der Ansprüche 1 bis 5, wobei das mindestens eine Mikroprogramm (46_{i,j}(1), 46_{i,j}(2), 46_{i,j}(3)), das in einem Register (44_{i,j}) gespeichert ist, Befehlszeilen für arithmetische und/oder logische Berechnungen enthält, um eine Matrix-Transponierung zwischen den zu verarbeitenden Daten, wie sie vom Eingabepufferspeicher (32_{i,j}) empfangen werden, und denselben zu verarbeitenden Daten, wie sie reorganisiert und in den gemeinsamen lokalen Adressraum (20_{i,j}) geschrieben werden, durchzuführen.

7. Steuereinrichtung für direkten Speicherzugang (22_{i,j}) nach einem der Ansprüche 1 bis 6, wobei zwei Schreibmodi des Verwaltungsmoduls (36_{i,j}) zum Schreiben durch eine Kennung parametrierbar sind, die in einem Header jedes zu verarbeitenden Datenpakets (48) enthalten ist:
- Einen ersten sequenziellen Schreibmodus, in dem die zu verarbeitenden Daten jedes Pakets, das diesen ersten Modus anzeigt, in den gemeinsamen lokalen Adressraum (20_{i,j}) von einer relativen Adresse aus geschrieben werden, die so definiert ist, dass sie an die letzte Adresse angrenzt, an die zu verarbeitende Daten des vorherigen Pakets zu verarbeitender Daten in der Reihenfolge des Empfangs der Pakete durch den Eingabepufferspeicher (32_{i,j}) geschrieben worden sind, und
- einen zweiten Absolutversatz-Schreibmodus, in dem die zu verarbeitenden Daten jedes Pakets, das diesen zweiten Modus anzeigt, in den gemeinsamen lokalen Adressraum (20_{i,j}) von einer relativen Adresse aus geschrieben werden, die durch eine vorbestimmte Referenzadresse des gemeinsamen lokalen Adressraums (20_{i,j}) definiert ist.

8. Vorrichtung (10) zur Datenverarbeitung mit einem Netzwerk auf einem Chip, die Folgendes umfasst:
- ein Netzwerk (12) zur Verbindung von Rechenknoten (C_{i,j}) für den Austausch von Datenpaketen untereinander oder mit mindestens einem Peripheriegerät (28, 30), und
- eine Vielzahl von Rechenknoten (C_{i,j}), die jeweils Folgendes umfassen:
• Eine Schnittstelle für die Eingabe/Ausgabe (14_{i,j}) von Datenpaketen,
• einen gemeinsam genutzten lokalen Adressraum (20_{i,j}),
• eine Steuereinrichtung für direkten Speicherzugang (22_{i,j}) nach einem der Ansprüche 1 bis 7 für einen direkten Schreibzugriff in den gemeinsamen lokalen Adressraum (20_{i,j}) auf Daten, die aus Paketen extrahiert werden, die von seinem Eingabepufferspeicher (32_{i,j}) empfangen werden, und
• mindestens einen Prozessor (16_{i,j}, 18_{i,j}) zur Verarbeitung von Daten, der nicht die Steuereinrichtung für direkten Speicherzugang (22_{i,j}) ist, für eine Verarbeitung der Daten, die von der Steuereinrichtung für direkten Speicherzugang (22_{i,j}) in den gemeinsamen lokalen Adressraum (20_{i,j}) geschrieben werden.

9. Verfahren zum Empfangen und Speichern von Daten durch einen Rechenknoten (C_{i,j}) einer Vorrichtung (10) zur Datenverarbeitung mit einem Netzwerk auf einem Chip, das folgende Schritte umfasst:
- Empfang (100), über eine Schnittstelle für die Eingabe/Ausgabe (14_{i,j}) des Rechenknotens (C_{i,j}), durch einen Eingabepufferspeicher (32_{i,j}) einer Steuereinrichtung für direkten Speicherzugang (22_{i,j}) des Rechenknotens, von Datenpaketen, die verarbeitet werden sollen,
- Extrahieren (102) der zu verarbeitenden Daten aus jedem Paket durch die Steuereinrichtung für direkten Speicherzugang (22_{i,j}),
- Schreiben (104, 106), durch die Steuereinrichtung für direkten Speicherzugang (22_{i,j}), der empfangenen und ausgelesenen zu verarbeitenden Daten in einen lokalen Adressraum (20_{i,j}) des Rechenknotens (C_{i,j}), wobei dieser lokale Adressraum (20_{i,j}) von mindestens einem Prozessor (16_{i,j}, 18_{i,j}) zur Verarbeitung der genannten Daten, der nicht die Steuereinrichtung für direkten Speicherzugang (22_{i,j}) ist, gemeinsam genutzt wird,
ferner folgende Schritte umfasst:
- Ausführen (104), durch eine arithmetische und logische Einheit (42_{i,j}) der Steuereinrichtung für direkten Speicherzugang (22_{i,j}), von mindestens einem Mikroprogramm (46_{i,j}(1), 46_{i,j}(2), 46_{i,j}(3)), das aus Befehlszeilen für arithmetische und/oder logische Berechnungen besteht, und
- Schreiben (106) der empfangenen und ausgelesenen Daten in den gemeinsamen lokalen Adressraum (20_{i,j}) an Adressen, die durch die Reorganisation (F) erhalten wurden, wobei die Befehlszeilen des mindestens einen Mikroprogramms (46_{i,j}(1), 46_{i,j}(2), 46_{i,j}(3)) nur auf Adressen (@d) zur Speicherung von zu verarbeitenden Daten beziehen, die von dem Eingabepufferspeicher (32_{i,j}) für eine Reorganisation (F) derselben in dem gemeinsamen lokalen Adressraum (20_{i,j}) empfangen werden, und wobei mindestens zwei Betriebsmodi des mindestens einen in einem Register (44_{i,j}) gespeicherten Mikroprogramms (46_{i,j}(1), 46_{i,j}(2), 46_{i,j}(3)) parametrierbar sind:
- Ein erster Neustartmodus, bei dem jede Ausführung des mindestens einen Mikroprogramms (46_{i,j}(1), 46_{i,j}(2), 46_{i,j}(3)) auf ein zu verarbeitendes Datenpaket auf einem neuen Ausführungskontext startet, und
- ein zweiter Pausenmodus, bei dem jede Ausführung des mindestens einen Mikroprogramms (46_{i,j}(1), 46_{i,j}(2), 46_{i,j}(3)) auf einem zu verarbeitenden Datenpaket auf einem Ausführungskontext des vorhergehenden zu verarbeitenden Datenpakets in der Reihenfolge des Empfangs der Pakete durch den Eingabepufferspeicher (32_{i,j}) gestartet wird.

## Claims

1. A direct memory access controller (22_{i,j}) intended to be placed in a computing node (C_{i,j}) of a system on chip (12), comprising:
- an input buffer (32_{i,j}) for receiving packets of data to be processed, coming from an input/output interface (14_{i,j}) of the computing node (C_{i,j}),
- a module (36_{i,j}) for controlling the writing of the data to be processed, extracted from each packet, in a local address space (20_{i,j}) of the computing node (C_{i,j}), said local address space (20_{i,j}) being shared by at least one processor (16_{i,j}, 18_{i,j}) for processing said data other than the direct memory access controller (22_{i,j}),
- an arithmetic logic unit (42_{i,j}) for executing microprograms, and
- a storage register (44_{i,j}) for storing at least one microprogram, comprising at least one microprogram (46_{i,j}(1), 46_{i,j}(2), 46_{i,j}(3)), stored in the register (44_{i,j}), consisting of instruction lines for arithmetic and/or logical calculation, the write control module (36_{i,j}) being designed to control the execution of said at least one microprogram (46_{i,j}(1), 46_{i,j}(2), 46_{i,j}(3)) by the arithmetic logic unit (42_{i,j}), wherein the instruction lines of said at least one microprogram (46_{i,j}(1), 46_{i,j}(2), 46_{i,j}(3)) concern only storage addresses (@d) for storing the data to be processed, received by the input buffer (32_{i,j}), for a reorganization (F) of same in the shared local address space (20_{i,j}), and wherein at least two operating modes of said at least one microprogram (46_{i,j}(1), 46_{i,j}(2), 46_{i,j}(3)) stored in the register (44_{i,j}) are configurable:
- a first restart mode in which each execution of said at least one microprogram (46_{i,j}(1), 46_{i,j}(2), 46_{i,j}(3)) on a packet of data to be processed starts in a new execution context, and
- a second pause mode in which each execution of said at least one microprogram (46_{i,j}(1), 46_{i,j}(2), 46_{i,j}(3)) on a packet of data to be processed starts in an execution context of the preceding packet of data to be processed in the order of receipt of the packets by the input buffer (32_{i,j}).

2. The direct memory access controller (22_{i,j}) according to claim 1, wherein:
- several microprograms (46_{i,j}(1), 46_{i,j}(2), 46_{i,j}(3)) are stored in the register (44_{i,j}) and respectively associated with several corresponding identifiers,
- the write control module (36_{i,j}) is designed to select one of the microprograms (46_{i,j}(1), 46_{i,j}(2), 46_{i,j}(3)) for each received packet of data to be processed (48) based on a correspondence between the identifier associated with the microprogram and an identifier (Id) included in a header (50) of each packet of data to be processed (48).

3. The direct memory access controller (22_{i,j}) according to claim 1 or 2, wherein:
- said at least one microprogram (46_{i,j}(1), 46_{i,j}(2), 46_{i,j}(3)) stored in the register (44_{i,j}) comprises execution parameters to be defined,
- the write control module (36_{i,j}) is designed to define at least a portion of these execution parameters on the basis of execution data (param) included in a header of each packet of data to be processed (48).

4. The direct memory access controller (22_{i,j}) according to claim 3, wherein the execution parameters to be defined comprise image processing parameters including at least one of the elements of the set consisting of:
- size(s) of lines (L) or columns (C) of image blocks, and
- number(s) of successive pieces of data to be processed, which are to be written to successive addresses in the shared local address space (20_{i,j}).

5. The direct memory access controller (22_{i,j}) according to any one of claims 1 to 4, wherein the write control module (36_{i,j}) is designed to control the execution of several microprograms in parallel on several different execution channels, each of which identified by a channel identifier included in each packet of data to be processed (48), and to reserve several address sub-spaces associated with the execution channels, respectively, in the shared local address space (20_{i,j}).

6. The direct memory access controller (22_{i,j}) according to any one of claims 1 to 5, wherein said at least one microprogram (46_{i,j}(1), 46_{i,j}(2), 46_{i,j}(3)) stored in the register (44_{i,j}) comprises instruction lines for arithmetic and/or logical calculation aimed at performing a matrix transposition between the data to be processed as received by the input buffer (32_{i,j}) and the same data to be processed, as reorganized and written to the shared local address space (20_{i,j}).

7. The direct memory access controller (22_{i,j}) according to any one of claims 1 to 6, wherein two write modes of the write control module (36_{i,j}) are configurable by an identifier included in a header of each packet of data to be processed (48):
- a first sequential write mode in which the data to be processed of each packet indicating this first mode are written to the shared local address space (20_{i,j}) on the basis of a relative address defined as being contiguous to the last address to which was written a piece of data to be processed from the previous packet of data to be processed, in the order of receipt of the packets by the input buffer (32_{i,j}), and
- a second absolute-offset write mode in which the data to be processed of each packet indicating this second mode are written to the shared local address space (20_{i,j}) on the basis of a relative address defined by an offset, also indicated in a header of this packet, to a predetermined reference address of the shared local address space (20_{i,j}).

8. A network-on-chip data processing device (10) comprising:
- a network (12) for interconnecting computing nodes (C_{i,j}) for the exchange of data packets between them or with at least one peripheral (28, 30), and
- a plurality of computing nodes (C_{i,j}), each of which comprising:
• a data packet input/output interface (14_{i,j}),
• a shared local address space (20_{i,j}),
• a direct memory access controller (22_{i,j}) according to any one of claims 1 to 7, for direct write access in the shared local address space (20_{i,j}) for writing data extracted from packets received by its input buffer (32_{i,j}), and
• at least one data processor (16_{i,j}, 18_{i,j}) other than the direct memory access controller (22_{i,j}), for processing the data written by the direct memory access controller (22_{i,j}) to the shared local address space (20_{i,j}).

9. A method for receiving and storing data by a computing node (C_{i,j}) of a network-on-chip (12) data processing device (10), comprising the following steps:
- receiving (100) packets of data to be processed via an input/output interface (14_{i,j}) of the computing node (C_{i,j}), by an input buffer (32_{i,j}) of a direct memory access controller (22_{i,j}) of the computing node,
- extraction (102) of the data to be processed from each packet by the direct memory access controller (22_{i,j}),
- writing (104, 106) of the received and extracted data to be processed in a local address space (20_{i,j}) of the computing node (C_{i,j}) by the direct memory access controller (22_{i,j}), said local address space (20_{i,j}) being shared by at least one processor (16_{i,j}, 18_{i.j}) for processing said data other than the direct memory access controller (22_{i,j}),
further including the following steps:
- execution (104) by an arithmetic logic unit (42_{i,j}) of the direct memory access controller (22_{i,j}), of at least one microprogram (46_{i,j}(1), 46_{i,j}(2), 46_{i,j}(3)) consisting of instruction lines for arithmetic and/or logical calculation, and
- writing (106) of the received and extracted data in the shared local address space (20_{i,j}) to addresses obtained by said reorganization (F),
wherein the instruction lines of said at least one microprogram (46_{i,j}(1), 46_{i,j}(2), 46_{i,j}(3)) concern only storage addresses (@d) for storing the data to be processed, received by the input buffer (32_{i,j}), for a reorganization (F) of same in the shared local address space (20_{i,j}), and wherein at least two operating modes of said at least one microprogram (46_{i,j}(1), 46_{i,j}(2), 46_{i,j}(3)) stored in the register (44_{i,j}) are configurable:
- a first restart mode in which each execution of said at least one microprogram (46_{i,j}(1), 46_{i,j}(2), 46_{i,j}(3)) on a packet of data to be processed starts in a new execution context, and
- a second pause mode in which each execution of said at least one microprogram (46_{i,j}(1), 46_{i,j}(2), 46_{i,j}(3)) on a packet of data to be processed starts in an execution context of the preceding packet of data to be processed in the order of receipt of the packets by the input buffer (32_{i,j}).
